# EUROPÄISCHE PATENTSCHRIFT

(11) **EP 1 091 805 B1**
(45) Veröffentlichungstag und Bekanntmachung des Hinweises auf die Patenterteilung: **31.07.2002**
(21) Anmeldenummer: 99955234.2
(22) Anmeldetag: 28.05.1999
(51) Int. Cl.: B01J 35/04, F01N 3/28

(54) **VERFAHREN UND BLECHPAKET ZUR HERSTELLUNG EINES WABENKÖRPERS MIT EINER VIELZAHL VON FÜR EIN FLUID DURCHLÄSSIGEN KANÄLEN**
METHOD AND SHEET METAL PILE FOR PRODUCING A HONEYCOMB BODY WITH A PLURALITY OF CHANNELS THROUGH WHICH A FLUID IS ABLE TO FLOW
PROCEDE ET PAQUET DE TOLES POUR LA REALISATION D'UN CORPS EN NIDS D'ABEILLES COMPORTANT UNE PLURALITE DE CANAUX POUVANT LAISSER PASSER UN FLUIDE

(30) Priorität: 04.06.1998 DE 19825018
(43) Veröffentlichungstag der Anmeldung: 18.04.2001
(73) Patentinhaber: Emitec Gesellschaft für Emissionstechnologie mbH, 53797 Lohmar (DE)
(72) Erfinder: DIEWALD, Robert, D-53721 Siegburg (DE); VIERKÖTTER, Manfred, D-53819 Neunkirchen-Seelscheid (DE)
(74) Vertreter: Kahlhöfer, Hermann, Dipl.-Phys.
(86) Internationale Anmeldenummer: EP9903710
(87) Internationale Veröffentlichungsnummer: WO9962635

(56) Entgegenhaltungen:
- EP-A- 0 332 891
- DE-A- 19 522 327
- DE-A- 19 525 262
- DE-A- 19 528 963
- DE-C- 4 016 276

## Beschreibung

Der Gegenstand der Erfindung bezieht sich auf ein Verfahren sowie auf ein Blechpaket zur Herstellung eines Wabenkörpers mit einer Vielzahl von für ein Fluid durchlässigen Kanälen.

Es sind metallische Wabenkörper bekannt, die als Katalysator-Trägerkörper verwendet werden. Ein solcher Wabenkörper besteht aus einer Vielzahl von zumindest teilweise strukturierten Blechlagen. Zahlreiche Beispiele für die Ausgestaltungen eines Wabenkörpers sind beispielsweise durch die US-PS 4,923,109, die WO 90/03220, die EP 0 322 566 A1 und die WO 94/01661 bekannt.

Die WO 97/00725 befaßt sich mit der Herstellung eines Wabenkörpers mit einer Vielzahl von für ein Fluid durchlässigen Kanälen aus einer Vielzahl von zumindest teilweise strukturierten Lagen. Diese Druckschrift schlägt vor, daß zumindest ein Stapel aus einer Mehrzahl von zumindest teilweise strukturierten Blechlagen geschichtet wird. Jeder Stapel wird zur Ausbildung eines Blechpaketes um je eine Knicklinie auf sich selbst gefaltet. Jedes Blechpaket wird in einer Form angeordnet, die eine der Außenform des herzustellenden Wabenkörpers entsprechende Kontur aufweist. Jeder Stapel wird von einer im Zentralbereich der Form angeordneten Verschlingungseinrichtung gehalten. Danach werden alle Stapel durch relatives Drehen der Verschlingungseinrichtung gegenüber der Form zu einem Wabenkörper verschlungen. Der so vorbereitete Wabenkörper wird anschließend in ein Mantelrohr eingebracht. Ein weiteres Verfahren zum Herstellen eines Wabenkörpers ist durch die WO 97/00135 bekannt.

In weiteren Herstellungsschritten wird der Wabenkörper mit dem Mantelrohr verlötet. Hierbei werden im wesentlichen die Endbereiche der einzelnen Blechlagen mit dem Mantelrohr verlötet. Bei den so hergestellten Wabenkörpern besteht die Gefahr, daß durch das Falten eines jeden Stapels auf sich selbst und das Verschlingen der Stapel zu einem Wabenkörper im Verbindungsbereich der einzelnen Blechlagen mit dem Mantelrohr einzelne Blechlagen über einen relativ großen Teilumfang der Mantelfläche des Mantelrohres mit dem Mantelrohr verlötet werden, wobei andere Blechlagen nur über einen relativ kleinen Umfangsabschnitt mit dem Mantelrohr verlötet werden. Eine solche Verbindung des Wabenkörpers mit dem Mantelrohr birgt die Gefahr, daß der Wabenkörper aufgrund seiner mechanischen und thermischen Beanspruchung beschädigt wird. Insbesondere besteht die Gefahr, daß die Lötverbindung zwischen einzelnen Blechlagen zumindest teilweise zerstört wird.

Hiervon ausgehend liegt der vorliegenden Erfindung die Aufgabe zugrunde ein Verfahren zur Herstellung eines Wabenkörpers anzugeben welcher eine gleichmäßigere Ausbildung einer Lötverbindung mit einem Mantelrohr ermöglicht. Ein weiteres Ziel der Erfindung ist es, ein besonders geeignetes Blechpaket zur Ausbildung eines Wabenkörpers anzugeben.

Diese Zielsetzung wird durch ein Verfahren zur Herstellung eines Wabenkörpers mit den Merkmalen des Anspruchs 1 beziehungsweise durch ein Blechpaket mit den Merkmalen des Anspruchs 9 erreicht. Vorteilhafte Weiterbildungen und Ausgestaltungen des erfindungsgemäßen Verfahrens beziehungsweise des Blechpakets sind Gegenstand der jeweiligen abhängigen Ansprüche.

Nach dem erfindungsgemäßen Verfahren zur Herstellung eines Wabenkörpers mit einer Vielzahl von für ein Fluid durchlässigen Kanälen wird vorgeschlagen, daß mindestens ein Stapel aus einer Mehrzahl von zumindest teilweise strukturierten Blechlagen, die geschichtet werden, ausgebildet wird. Danach wird ein jeder Stapel zur Ausbildung eines Blechpaketes um je eine Knicklinie so auf sich selbst gefaltet, daß das Blechpaket einen gekrümmten ersten Endbereich und einen dem ersten Endbereich gegenüberliegenden zweiten Endbereich aufweist. Die Faltung des Stapels auf sich selbst zur Ausbildung des Blechpaketes erfolgt dabei derart, daß der zweite Endbereich durch einen ersten Endabschnitt und einen zweiten Endabschnitt des Stapels gebildet wird. Der erste Endabschnitt weist eine erste Stirnfläche auf. Der zweite Endabschnitt weist eine zweite Stirnfläche auf. Die erste Stirnfläche und die zweite Stirnfläche bilden gemeinsam eine Stirnfläche des zweiten Endbereichs des Blechpaketes. Die Stirnflächen sind relativ zueinander geneigt. Die erste Stirnfläche bildet mit einer Mittelebene, die beispielsweise durch eine mittlere Blechlage des Blechpaketes gebildet ist, die auf sich selbst gefaltet ist, einen ersten Winkel α. Die zweite Stirnfläche bildet mit der Mittelebene einen zweiten Winkel β. Bei dem Winkel β und dem Winkel α handelt es sich um eingeschlossene Winkel. Die Winkel sind so gewählt, daß der erste Winkel α kleiner ist als der zweite Winkel β. Dies wird dadurch erreicht, daß sich während der Faltung die Blechlagen in dem ersten Endabschnitt wesentlich stärker relativ zueinander verschoben werden als die Blechlagen in dem zweiten Endabschnitt. Prinzipiell ist der zweite Endbereich des Blechstapels asymmetrisch ausgebildet.

Jedes Blechpaket wird danach von einer im Zentralbereich einer Form angeordneten Verschlingungseinrichtung gehalten und durch relatives Drehen der Verschlingungseinrichtung über der Form zu einem Wabenkörper verschlungen.

Überraschenderweise hat sich herausgestellt, daß durch die erfindungsgemäße Verfahrensführung bei der Ausbildung eines Wabenkörpers, dieser in Umfangsrichtung betrachtet relativ gleichmäßig verteilte Endteile der Blechlagen aufweist, so daß eine wesentlich gleichmäßigere Verlötung des Wabenkörpers mit einem Mantelrohr möglich ist. Dadurch, daß der Wabenkörper gleichmäßiger verlötet werden kann, kann eine höhere Funktionssicherheit des Wabenkörpers erreicht werden.

Nach einer vorteilhaften Weiterbildung des Verfahrens wird vorgeschlagen, daß während der Faltung des Stapels in dem ersten Endabschnitt eine wesentlich stärkere Relativverschiebung der Blechlagen zueinander zugelassen wird als in dem zweiten Endabschnitt. Insbesondere wird vorgeschlagen, daß während der Faltung die Blechlagen des Stapels des zweiten Endabschnitts im wesentlichen ortsfest sind. Hierdurch wird erreicht, daß der zweite Endabschnitt des Blechpaketes die ursprüngliche Gestalt des Endabschnitts als Stapel im wesentlichen beibehält. Entsprechend der Anzahl der Blechstapel, die zur Ausbildung eines Wabenkörpers herangezogen werden sowie entsprechend der Gestalt des zu erzielenden Wabenkörpers können verschiedene Blechstapel auch mit unterschiedlich ausgestalteten Endbereichen vorgesehen werden. Durch Kombination unterschiedlicher Blechpakete sowie durch entsprechende Ausbildungen der zweiten Endabschnitte während der Faltung eines Stapels kann die Funktionssicherheit eines Wabenkörpers erhöht werden.

Zur Vereinfachung der Herstellung eines Wabenkörpers wird auch vorgeschlagen, daß wenigstens während der Faltung der Stapel in wenigstens einem Bereich zwischen dem zweiten Endabschnitt und der Knicklinie festgehalten wird. Dies kann beispielsweise durch Klemmen des Stapels am zweiten Endabschnitt erfolgen. Die Klemmung kann auch so sein, daß diese eine gewisse Verschiebung der Blechlagen zuläßt.

Vorzugsweise wird ein Stapel dadurch gebildet, daß die Blechlagen so geschichtet werden, daß die zweite Stirnfläche des Stapels des zweiten Endabschnitts im wesentlichen senkrecht zur Längsrichtung des Stapels verläuft. Insbesondere drei solcher Stapel werden zur Ausbildung eines Wabenkörpers verwendet.

Nach einer weiteren bevorzugten Ausgestaltung wird vorgeschlagen, daß mindestens ein Stapel aus einer Vielzahl von zumindest teilweise strukturierten Blechlagen geschichtet wird und sich die Blechlagen im wesentlichen vollständig überlappen.

Gemäß einer weiteren vorteilhaften Ausbildung des Verfahrens wird vorgeschlagen, daß in einer Form mindestens zwei Blechpakete angeordnet werden. Der gekrümmte Endbereich eines jeden Blechpaketes wird in einem Zentralbereich der Form angeordnet. Jedes Blechpaket ist radial auswärts gerichtet, wie dies beispielsweise durch die WO 97/00725 bekannt ist. Die Blechpakete werden von der Verschlingungseinrichtung gehalten. Die Blechpakete sind so in der Form angeordnet, daß sich in einer Umfangsrichtung betrachtet ein erster Endabschnitt mit einem zweiten Endabschnitt abwechselt. Diese Anordnung der Blechpakete in der Form hat den Vorteil, daß eine gleichsinnige Biegung eines jeden Blechpaketes erfolgt. Hierdurch wird auch erreicht, daß eine gleichmäßigere Verteilung der Enden einer jeden Blechlage eines Blechpaketes in Umfangsrichtung betrachtet, bei jedem Blechpaket stattfindet.

Gemäß einer noch weiteren vorteilhaften Ausbildung des Verfahrens wird vorgeschlagen, daß der Drehsinn der Verschlingungseinrichtung so gewählt ist, daß jedes Blechpaket um jeweils eine Biegeachse gebogen wird, die im wesentlichen parallel zur Knicklinie und benachbart zu einem zwischen dem zweiten Endabschnitt und dem gekrümmten Endbereich liegenden Abschnitt einer äußeren Blechlage verläuft.

Gemäß einem weiteren erfinderischen Gedanken wird ein Blechpaket zur Herstellung eines Wabenkörpers mit einer Vielzahl von für ein Fluid durchlässigen Kanälen vorgeschlagen. Das Blechpaket besteht aus einer Mehrzahl von zumindest teilweise strukturierten Blechlagen die geschichtet und um eine gemeinsame Knicklinie auf sich selbst gefaltet sind. Das Blechpaket weist einen gekrümmten ersten Endbereich und einen dem ersten Endbereich gegenüberliegenden zweiten Endbereich auf. Der zweite Endbereich ist durch einen ersten Endabschnitt und einen zweiten Endabschnitt gebildet. Das Blechpaket zeichnet sich dadurch aus, daß der erste Endabschnitt eine erste Stirnfläche und der zweite Endabschnitt eine zweite Stirnfläche aufweist, wobei die erste Stirnfläche mit einer Mittelebene einen ersten Winkel α und die zweite Stirnfläche mit der Mittelebene einen zweiten Winkel β einschließt, wobei der erste Winkel α kleiner ist als der zweite Winkel β. Ein solch ausgebildetes Blechpaket ist insbesondere zur Herstellung eines Wabenkörpers geeignet. Das Blechpaket kann entsprechend der WO 97/00725 oder der aus der WO 97/00135 bekannten Verfahrensführung mit weiteren Blechpaketen entsprechender Ausgestaltung miteinander zu einem Wabenkörper verschlungen werden, wobei ein Wabenkörper erzielt wird, der Blechenden aufweist, die besonders gleichmäßig in Umfangsrichtung verteilt sind, so daß eine relativ gleichmäßige Lötverbindung zwischen dem Wabenkörper und einem Mantelrohr herstellbar ist. Vorzugsweise ist das Blechpaket so ausgebildet, daß der zweite Winkel β ca. 90° beträgt.

Weitere Einzelheiten und Vorteile des erfindungsgemäßen Verfahrens sowie eines erfindungsgemäßen Blechpakets werden anhand des in der Zeichnung dargestellten Ausführungsbeispiels erläutert. Es zeigen:
- Fig. 1: Schematisch und in einer perspektivischen Darstellung einen Stapel,
- Fig. 2: schematisch und perspektivisch ein Blechpaket,
- Fig. 3: schematisch und in einer Draufsicht eine Vorrichtung mit drei zu wickelnden Blechpaketen,
- Fig. 4 und 5: jeweils einen Momentzustand während eines Verschlingungsvorganges,
- Fig. 6: einen vollständig gewickelten Wabenkörper in einer Form,
- Fig. 7: vergrößert eine Einzelheit X nach Fig. 3 und
- Fig. 8: im Querschnitt die Vorrichtung nach Fig. 1.

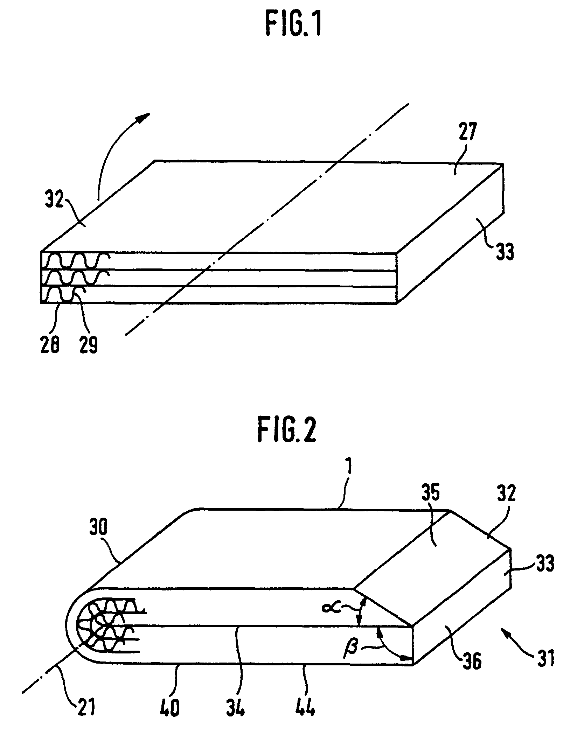

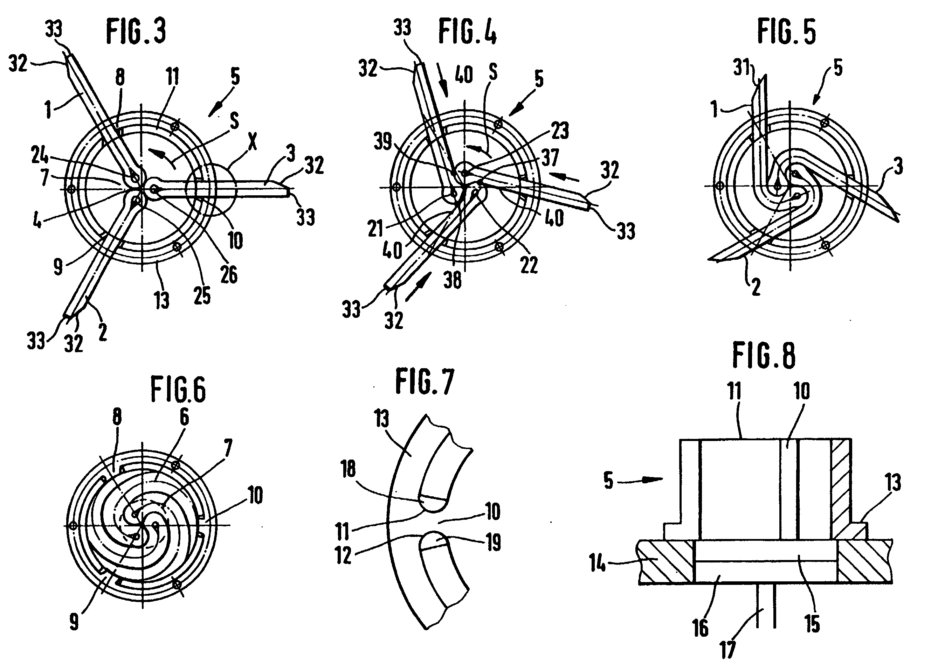

Figur 1 zeigt schematisch und in einer perspektivischen Darstellung einen Stapel 27. Der Stapel 27 umfaßt eine Vielzahl von zumindest teilweise strukturierten Blechlagen 28, 29. Der Stapel in der Darstellung nach Figur 1 ist durch glatte Blechlagen 28 sowie gewellte Blechlagen 29 gebildet. Die glatten Blechlagen 28 und die gewellten Blechlagen 29 wechseln sich gegenseitig ab. Die glatten Blechlagen 28 und die gewellten Blechlagen 29 überlappen sich in dem dargestellten Ausführungsbeispiel vollständig. Sie sind so übereinander geschichtet, so daß diese ein Prisma mit einer viereckigen Grundfläche bilden. Angedeutet in der Figur 1 ist durch die strichpunktierte Linie eine Knicklinie 21, um die der Stapel 27 auf sich selbst gefaltet wird. Die Knicklinie 21 verläuft im wesentlichen im Zentrum des Stapels 27.

Durch das Falten des Stapels 27 auf sich selbst und um die Knicklinie 21 wird ein Blechpaket 1 hergestellt, wie es in der Figur 2 beispielhaft dargestellt ist. Das Blechpaket 1 weist einen ersten Endbereich 30 auf. Der Endbereich 30, der der Knicklinie 21 benachbart ist, ist gekrümmt ausgebildet. Das Blechpaket 1 weist einen zweiten Endbereich 31 auf. Der zweite Endbereich 31 liegt dem ersten Endbereich 30 gegenüber. Der zweite Endbereich 31 ist durch einen ersten Endabschnitt 32 und einen zweiten Endabschnitt 33 des Stapels 27 gebildet.

Der erste Endabschnitt 32 weist eine erste Stirnfläche 35 auf. Die Stirnfläche 35 ist zum gegenüberliegenden ersten Endbereich 30 hin geneigt. Die Stirnfläche 35 schließt mit einer Mittelebene 34 einen ersten Winkel α ein. Der zweite Endabschnitt 33 weist eine zweite Stirnfläche 36 auf. Die Stirnfläche 36 schließt mit der Mittelebene 34 einen zweiten Winkel β ein. Wie aus der Figur 2 ersichtlich ist, ist der erste Winkel α kleiner, insbesondere wesentlich kleiner, als der zweite Winkel β. In dem dargestellten Ausführungsbeispiel beträgt der zweite Winkel β ca. 90°.

Figur 3 zeigt die Anordnung von drei Blechpaketen 1, 2, 3 in einer Form 5 in einer Draufsicht. Jedes Blechpaket 1, 2, 3 ist mit seinem jeweiligen gekrümmten ersten Endbereich 30 in einem Zentralbereich 7 der Form 5 angeordnet. Die Blechpakete 1, 2, 3 erstrecken sich radial auswärts vom Zentralbereich 7. Die Blechpakete 1, 2, 3 sind so angeordnet, daß sich in einer Umfangsrichtung betrachtet ein erster Endabschnitt 32 mit einem zweiten Endabschnitt 33 abwechselt.

Die Form umfaßt eine Wandung 11, deren drei rechteckförmige Durchgänge 8, 9, 10, in dem dargestellten Ausführungsbeispiel, äquidistant zueinander über den Umfang der Form 5 verteilt sind. Die Form kann über nicht dargestellte Verbindungsmittel über einen Außenflansch 13 mit einer Grundplatte 14 verbunden sein, wie dies in der Figur 8 dargestellt ist. Die Grundplatte 14 weist eine Durchgangsöffnung 15 auf, durch die ein Stempel 16, der an eine Betätigungsstange 17 angeordnet ist, hindurchführbar ist. Der Querschnitt der Öffnung 15 und des Stempels 16 entspricht dem lichten Querschnitt der Form 5. Die Durchgänge 8, 9 und 10 weisen Längsflächen 11 auf, die vorzugsweise im Querschnitt konvex ausgebildet sind, wie dies die Figur 7 zeigt. Vorzugsweise sind die Längsflächen 11, 12 mit einer Gleitschicht 18, 19 versehen, bei denen es sich um eine Gleitschicht aus keramischem Werkstoff handelt.

Der besseren Übersichtlichkeit wegen ist auf eine Darstellung der Verschlingungseinrichtung, die die Blechpakete 1, 2 und 3 um eine senkrecht auf der Zeichnungsebene stehende Achse 4 verdrehbar ist, nicht dargestellt. Die Wickeleinrichtung weist Wickeldorne 24, 25, 26 auf, die in ein jedes Blechpaket 1, 2 und 3 eingreifen und in Drehrichtung S der Verschlingungseinrichtung verdrehen. Die Wikkeldorne 24, 25, 26 greifen in einen Bereich des betreffenden Blechpaketes 1, 2, 3 ein, der im Bereich der Knicklinie 21, 22, 23 liegt.

Durch Verdrehen der Wickeldorne 24, 25, 26 um die Zentralachse 4 in Richtung S werden die einzelnen Blechpakete 1, 2 und 3 gleichsinnig verschlungen. Während des Wickelvorgangs gleiten die Blechpakete 1, 2 und 3 entlang der Gleitschichten 18, 19 eines jeden Durchgangs 8, 9, 10 in den Innenraum der Form. Die einzelnen Blechpakete werden um Biegeachsen 37, 38, 39 gebogen. Die jeweilige Biegeachse 37, 38, 39 verläuft im wesentlichen parallel zur Knicklinie 21, 22, 23 beziehungsweise zum Wickeldorn 24, 25, 26. Sie ist benachbart zu einem zwischen dem zweiten Endabschnitt 33 und dem gekrümmten Endbereich 30 liegenden Abschnitt 40 einer äußeren Blechlage 44 eines jeden Blechpaketes 1, 2, 3. Während des Umschlingungsvorgangs findet eine Verschiebung der Biegeachsen 37, 38, 39 statt. Die Lage der Biegeachsen 37, 38, 39 ist abhängig vom Umschlingungsumfang der Blechpakete 1, 2, 3.

Während des Umschlingungsvorgangs findet eine Verschiebung der Blechlagen 28, 29 statt, so daß der zweite Endbereich 31 sich im wesentlichen an die Innengestalt der Form 5 anpaßt. Die Verschiebung der einzelnen Blechlagen 28, 29 ist dabei so, daß eine gleichmäßige Verteilung der Enden die jeweiligen Blechlagen 28, 29 am Umfang des Wabenkörpers 6 erfolgt.

Die vorstehend beschriebene Vorrichtung, mitteils der das Verfahren zur Herstellung eines Wabenkörpers mit einer Vielzahl von für ein Fluid durchlässigen Kanälen erläutert wurde, stellt ein bevorzugtes Ausführungsbeispiel dar. Alternativ kann das Verfahren auch mittels der in der WO 97/00135 beschriebenen Vorrichtung und dem dort erläuterten Verfahren durchgeführt werden. Der Inhalt dieser WO 97/00135 sowie der DE 195 21 685.7 wird vollinhaltlich übernommen.

### Bezugszeichenliste

- 1, 2, 3: Blechpaket
- 4: Achse
- 5: Form
- 6: Wabenkörper
- 7: Zentralbereich
- 8, 9, 10: Durchgänge
- 11, 12: Längsflächen
- 13: Außenflansch
- 14: Platte
- 15: Öffnung
- 16: Stempel
- 17: Betätigungsstange
- 18, 19: Gleitschicht
- 21, 22, 23: Knicklinie
- 24, 25, 26: Wickeldorn
- 27: Stapel
- 28: glatte Blechlage
- 29: gewellte Blechlage
- 30: erster Endbereich
- 31: zweiter Endbereich
- 32: erster Endabschnitt
- 33: zweiter Endabschnitt
- 34: Mittelebene
- 35: erste Stirnfläche
- 36: zweite Stirnfläche
- 37, 38, 39: Biegeachse
- 40: Abschnitt

- 41: äußere Blechlage

- α: erster Winkel
- β: zweiter Winkel

- S: Drehrichtung

## Patentansprüche

1. Verfahren zur Herstellung eines Wabenkörpers mit einer Vielzahl von für ein Fluid durchlässigen Kanälen aus einer Vielzahl von zumindest teilweise strukturierten Blechlagen, bei dem
- mindestens ein Stapel (27) aus einer Mehrzahl von zumindest teilweise strukturierten Blechlagen (28, 29) geschichtet wird,
- jeder Stapel (27) zur Ausbildung eines Blechpaketes (1, 2, 3) um je eine Knicklinie (21, 22, 23) so auf sich selbst gefaltet wird, daß das Blechpaket (1, 2, 3) einen gekrümmten ersten Endbereich (30) und einen dem ersten Endbereich (30) gegenüberliegenden zweiten Endbereich (31) aufweist, der durch einen ersten Endabschnitt (32) und einen zweiten Endabschnitt (33) des Stapels (27) gebildet ist, wobei der erste Endabschnitt (32) mit seiner ersten Stirnfläche (35) und einer Mittelebene (34) einen ersten Winkel (α) und der zweite Endabschnitt (33) mit seiner zweiten Stirnfläche (36) und der Mittelebene (34) einen zweiten Winkel (β) einschließt, wobei der erste Winkel (α) kleiner ist als der zweite Winkel (β) ist.
- jedes Blechpaket (1, 2, 3) von einer im Zentralbereich (7) einer Form (5) angeordneten Verschlingungseinrichtung (24, 25, 26) gehalten und durch relatives Drehen der Verschlingungseinrichtung gegenüber der Form (5) zu einem Wabenkörper (6) verschlungen wird.

2. Verfahren nach Anspruch 1, bei dem während der Faltung des Stapels (27) in dem ersten Endabschnitt (32) eine wesentlich stärkere Relativverschiebung der Blechlagen (28, 29) zueinander zugelassen wird als in dem zweiten Endabschnitt (33).

3. Verfahren nach Anspruch 3, bei dem während der Faltung die Blechlagen (28, 29) des Stapels (27) des zweiten Endabschnittes (33) im wesentlichen ortsfest sind.

4. Verfahren nach Anspruch 1, 2 oder 3, bei dem wenigstens während der Faltung der Stapel (27) in wenigstens einem Bereich (37) zwischen dem zweiten Endabschnitt (33) und der Knicklinie (21) festgehalten wird.

5. Verfahren nach einem der Ansprüche 1 bis 4, bei dem die Blechlagen (28, 29) so geschichtet werden, daß die zweite Stirnfläche (36) des Stapels (27) des zweiten Endabschnittes (33) im wesentlichen senkrecht zur Längsrichtung des Stapels (27) verläuft.

6. Verfahren nach einem der Ansprüche 1 bis 5, bei dem mindestens ein Stapel (27) aus einer Mehrzahl von zumindest teilweise strukturierten Blechlagen (28, 29) geschichtet wird und sich die Blechlagen (28, 29) im wesentlichen vollständig überlappen.

7. Verfahren nach einem der Ansprüche 1 bis 6, bei dem in einer Form (5) mindestens zwei Blechpakete (1, 2, 3) mit dem jeweiligen gekrümmten ersten Endbereich (30) in dem Zentralbereich (7) und radialauswärts gerichtet angeordnet und so von der Verschlingungseinrichtung (24, 25, 26) gehalten werden, daß sich in einer Umfangsrichtung betrachtet ein erster Endabschnitt (32) mit einem zweiten Endabschnitt (33) abwechselt.

8. Verfahren nach einem der Ansprüche 1 bis 6, bei dem der Drehsinn der Verschlingungseinrichtung (24, 25, 26) so gewählt ist, daß jedes Blechpaket (1, 2, 3) um jeweils eine Biegeachse (37, 38, 39) gebogen wird, die im wesentlichen parallel zur Knicklinie (21, 22, 23) und benachbart zu einem zwischen dem zweiten Endabschnitt (33) und dem gekrümmten Endbereich (30) liegenden Abschnitt (40) einer äußeren Blechlage (41) verläuft.

9. Blechpaket zur Herstellung eines Wabenkörpers mit einer Vielzahl von für ein Fluid durchlässigen Kanälen, mit einer Mehrzahl von zumindest teilweise strukturierten Blechlagen (29, 28), die geschichtet und um eine gemeinsame Knicklinie (21, 22, 23) auf sich selbst gefaltet sind, wobei das Blechpaket (1, 2, 3) einen gekrümmten ersten Endbereich (30) und einen dem ersten Endbereich (30) gegenüberliegenden zweiten Endbereich (31) aufweist, der durch einen ersten Endabschnitt (32) und einen zweiten Endabschnitt (33) gebildet ist, **dadurch gekennzeichnet, daß** der erste Endabschnitt (32) eine erste Stirnfläche (35) und der zweite Endabschnitt (33) eine zweite Stirnfläche (36) aufweist, daß die erste Stirnfläche (35) mit einer Mittelebene (34) einen ersten Winkel (α) und die zweite Stirnfläche (36) mit der Mittelebene (34) einen zweiten Winkel (β) einschließt, und daß der erste Winkel (α) kleiner ist als der zweite Winkel (β).

10. Blechpaket nach Anspruch 9, dadurch gekennzeichent, daß der zweite Winkel (β) ca. 90° beträgt.

## Claims

1. Method for manufacturing a honeycomb body with a large number of fluid permeable channels from a large number of at least partially structured sheet metal layers, in which
- at least one stack (27) is layered up from a plurality of at least partially structured sheet metal layers (28, 29),
- each stack (27) for forming a sheet metal package (1, 2, 3) is folded onto itself along a respective bending line (21, 22, 23) such that the sheet metal package (1, 2, 3) comprises a curved first end area (30) and a second end area (31) opposite to the first end area (30), which is formed by a first end section (32) and a second end section (33) of the stack (27), wherein the first end face (35) of the first end section (32) forms a first angle (α) with a central plane (34), and the second end face (36) of the second end section (33) forms a second angle (β) with the central plane (34), wherein the first angle (α) is smaller than the second angle (β),
- each sheet metal package (1, 2, 3) is held by a looping means (24, 25, 26) that is located in the central area (7) of a mould (5) and is looped by rotation of the looping means relative to the mould (5) into a honeycomb body (6).

2. Method according to claim 1, in which during the folding of the stack (27) a substantially greater relative displacement of the sheet metal layers (28, 29) with respect to one another is permitted in the first end section (32) than in the second end section (33).

3. Method according to claim 3, in which during the folding the sheet metal layers (28, 29) of the stack (27) of the second end section (33) are substantially stationary.

4. Method according to claim 1, 2 or 3 in which at least during the folding, the stack (27) is held in at least one area (27) between the second end section (33) and the bending line (21).

5. Method according to one of the claims 1 to 4, in which the sheet metal layers (28, 29) are layered such that the second end face (36) of the stack (27) of the second end section (33) is substantially perpendicular to the longitudinal direction of the stack (27).

6. Method according to one of the claims 1 to 5, in which at least one stack (27) is layered from a plurality of at least partially structured sheet metal layers (28, 29), and the sheet metal layers (28, 29) overlap substantially completely.

7. Method according to one of the claims 1 to 6, in which in a mould (5) at least two sheet metal package (1, 2, 3) are arranged with the respective curved first end section (30) in the central area (7) and are lined radially outwards, and held by the looping means (24, 25, 26) such that viewed in a direction along the circumference, a first end section (32) alternates with a second end section (33).

8. Method according to one of the claims 1 to 6, in which the direction of rotation of the looping means (24,25, 26) is selected such, that each metal package (1, 2, 3) is respectively bend around a bending axis (37, 38, 39) which is substantially parallel to the bending line (21, 22, 23) and adjacent to a section (40) of an outside sheet metal layer (41) that is located between the second end section (33) and the curved end area (30).

9. Sheet metal package for manufacturing a honeycomb body with a large number of fluid permeable channels, with a plurality of at least partially structured sheet metal layers (27, 28), which are layered up and folded over onto themselves along a common bending line (21, 22, 23), wherein the sheet metal package (1, 2, 3) comprises a curved first end area (30) and a second end area (31) opposite to the first end area (30), which is formed by a first end section (32) and a second end section (33), **characterized in that** the first end section (32) comprises a first end face (35) and the second end section (33) comprises a second end face (36), that the first end face (35) forms a first angle (α) with a central plane (34), and the second end face (36) forms a second angle (β) with the central plane (34), and that the first angle (α) is smaller than the second angle (β).

10. Sheet metal package according to claim 9, **characterized in that** the second angle (β) is approximately 90°.

## Revendications

1. Procédé destiné à la fabrication d'un corps en nids d'abeilles comportant une multiplicité de canaux pouvant être traversés par un fluide d'une multiplicité de couches de tôles au moins partiellement structurées, dans le cas duquel
- au moins une pile (27) est empilée d'une pluralité de couches de tôles (28, 29) au moins partiellement structurées,
- pour la réalisation d'un paquet de tôles (1, 2, 3) chaque pile (27) est pliée autour d'une ligne de pliage (21, 22, 23) respective sur elle-même de telle manière que le paquet de tôles (1, 2, 3) présente une première zone d'extrémité (30) courbée et une deuxième zone d'extrémité (31) située en vis-à-vis de la première zone d'extrémité (30), ladite deuxième zone d'extrémité (31) étant formée par une première section d'extrémité (32) et une deuxième section d'extrémité (33) de la pile (27), la première section d'extrémité (32) enfermant avec sa première face frontale (35) et un plan médian (34) un premier angle α et la deuxième section d'extrémité avec sa deuxième face frontale (36) et le plan médian (34) enfermant un deuxième angle β, le premier angle α étant plus petit que le deuxième angle β,
- chaque paquet de tôle (1, 2, 3) est retenu par une installation d'entrelacement (24, 25, 26) agencée dans la zone centrale (7) d'une forme (5) et est entrelacé par rotation relative de l'installation d'entrelacement par rapport à la forme (5) en un corps en nids d'abeilles (6).

2. Procédé selon la revendication 1, dans le cas duquel lors du pliage de la pile (27) dans la première section d'extrémité (32) un déplacement relatif des couches de tôles (28, 29) les unes par rapport aux autres sensiblement plus élevé que dans la deuxième section d'extrémité (33) est permis.

3. Procédé selon la revendication 3, dans le cas duquel durant le pliage les couches de tôles (28, 29) de la pile (27) de la deuxième section d'extrémité (33) sont sensiblement stationnaires.

4. Procédé selon la revendication 1, 2 ou 3, dans le cas duquel au moins durant le pliage la pile (27) est retenue entre la deuxième section d'extrémité (33) et la ligne de pliage (21) dans au moins une zone (37).

5. Procédé selon l'une des revendications 1 à 4, dans quel cas les couches de tôles (28, 29) sont empilées de telle manière que la deuxième face frontale (36) de la pile (27) de la deuxième section d'extrémité (33) s'étend sensiblement perpendiculairement à la direction longitudinale de la pile (27).

6. Procédé selon l'une des revendications 1 à 5, dans quel cas au moins une pile (27) est empilée à partir d'une pluralité de couches de tôles (28, 29) au moins partiellement structurées et les couches de tôles (28, 29) se chevauchent sensiblement complètement.

7. Procédé selon l'une des revendications 1 à 6, dans quel cas au moins deux paquets de tôles (1, 2, 3) sont agencés et orientés radialement vers l'extérieur dans une forme (5) avec la première zone d'extrémité courbée (30) respective dans la zone centrale (7) et sont retenus de telle manière par l'installation d'entrelacement (24, 25, 26) que, vu dans une direction périphérique, une première section d'extrémité (32) alterne avec une deuxième section d'extrémité (33).

8. Procédé selon l'une des revendications 1 à 6, dans quel cas le sens de rotation de l'installation d'entrelacement (24, 25, 26) est choisi de telle manière que chaque paquet de tôles (1, 2, 3) est plié autour d'un axe de pliage respectif (37, 38, 39) qui s'étend sensiblement de manière parallèle à la ligne de pliage (21, 22, 23) et adjacente d'une section (40) d'une couche de tôle extérieure (41) se trouvant entre la deuxième section d'extrémité (33) et de la zone d'extrémité (30) courbée.

9. Paquet de tôles destiné à la fabrication d'un corps en nids d'abeilles comportant une multiplicité de canaux pouvant être traversés par un fluide, avec une pluralité de couches de tôles au moins partiellement structurées (29, 28) qui sont empilées et sont pliées sur elles-même autour d'une ligne de pliage (21, 22, 23) commune, le paquet de tôles (1, 2, 3) présentant une première zone d'extrémité courbée (30) et une deuxième zone d'extrémité (31) vis-à-vis de la première zone d'extrémité (30) ladite deuxième zone d'extrémité (31) étant formée par une première section d'extrémité (32) et par une deuxième section d'extrémité (33), **caractérisé en ce que** la première section d'extrémité (32) présente une première face frontale (35) et la deuxième section d'extrémité (33) une deuxième face frontale (36), **en ce que** la première face frontale (35) enferme avec un plan médian (34) un premier angle (α) et la deuxième face frontale (36) avec le plan médian (34) un deuxième angle (β), et **en ce que** le premier angle (α) est plus petit que le deuxième angle (β).

10. Paquet de tôles selon la revendication 9, **caractérisé en ce que** le deuxième angle (β) comporte à peu près 90°.
